(19) Europäisches Patentamt / European Patent Office / Office européen des brevets

(11) **EP 2 046 042 A1**

(12) **EUROPEAN PATENT APPLICATION**

(43) Date of publication:
**08.04.2009 Bulletin 2009/15**

(51) Int Cl.:
*H04N 7/24* (2006.01)     *H04N 7/26* (2006.01)
*H04N 7/58* (2006.01)     *H04N 7/64* (2006.01)

(21) Application number: **07291195.1**

(22) Date of filing: **02.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Leprovost, Yann**
 **91260 Nozay (FR)**
• **Sayadi, Bessem**
 **92330 Sceaux (FR)**

(74) Representative: **Croonenbroek, Thomas Jakob**
**InnoVinciA**
**7 Place des Arts**
**74200 Thonon-les-Bains (FR)**

(54) **Optimisation of video coding and transmission quality in a statistical multiplexer for multichannel video distribution network**

(57) A multichannel video compression system comprises a plurality of video encoders for encoding video signals along to a video coding rate, said video encoders receiving video signals from a channel, complexity determination means to determine the complexity of the encoded video signals, a multiplexer for multiplexing encoded video signals into a multiplexed encoded video signal, a controller to adapt the video coding rate of said video encoders with respect to an available bandwidth at the output of the multiplexer and the complexity of the encoded video signals of said video encoder. It further comprises associated forward error correction (FEC) coders for applying to said encoded video signals a forward error correction code at a channel coding rate, the controller having at least one additional input to receive a network transmission quality feedback of a video distribution network linked to the multichannel video compression system and additional outputs for controlling the channel coding rate of said forward error correction coders, the outputs of said forward error correction coders being provided to corresponding inputs of said multiplexer.

FIG.2

EP 2 046 042 A1

**Description**

**BACKGROUND OF THE INVENTION**

The present invention relates to digital multichannel video broadcasting. More specifically, the present invention relates to the optimization of the video and protection codings in a statistical multiplexer. The present invention is particularly adapted in the case of a mobile TV network.

Statistical multiplexing is the process of encoding a number of signals at variable bit rates and combining the variable-rate bitstreams into a single fixed-rate transport stream so that the bandwidth allocated to each signal is flexible and varies with each signal's bit rate need. Thus, statistical multiplexing is particularly efficient for multichannel networks and allows the optimization of the video coding rate with respect to the available bandwidth.

Another way to improve the efficiency and transmission quality of a video network is to minimize transmission errors. A well-known mean to achieve this minimization is the use of a forward error correction (FEC) code. Forward error correction is accomplished by adding redundant data to the original coded signal. The forward error correction coding rate can be adjusted to provide an adapted level of signal transmission security.

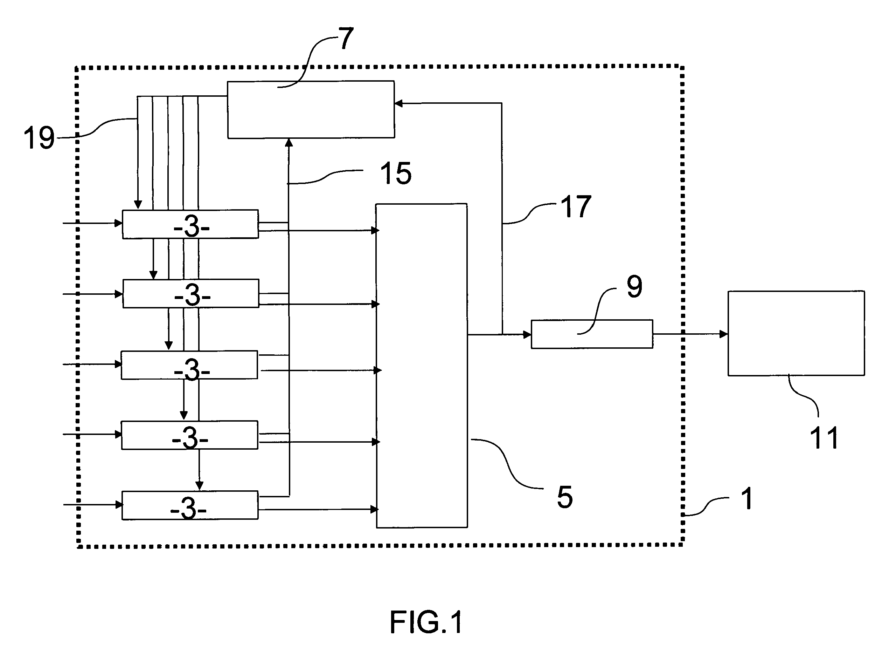

In the state of the art, as described on FIG.1, a statistical multiplexer 1 comprises video encoders 3 to compress video signals. The compressed signals are then combined by a multiplexer 5. A controller 7 receives program complexity feedbacks 15 as well as available bandwidth feedback 17. Based on these feedbacks, the controller distributes the available bandwidth among the different channels depending on their signal complexity. A FEC coder 9 is placed at the output of the multiplexer. The FEC coded signal is then sent to the modulation and transmission means 11. In such configuration, the forward error correction coding rate is set at a predefined value and therefore is not permanently adjusted to optimize the signal transmission quality.

It is an object of the present invention to optimize video and protection coding in order to improve the video quality at receivers.

**SUMMARY OF THE INVENTION**

One object of the present invention is to the optimize the video and protection coding in a statistical multiplexer.

The optimization of the video and protection coding rates is achieved by a multichannel video compression system comprising a plurality of video encoders for encoding video signals along to a video coding rate, said video encoders receiving video signals from a corresponding channel, complexity determination means to determine the complexity of the encoded video signals, a multiplexer for multiplexing encoded video signals into a multiplexed encoded video signal, a controller to adapt the video coding rate of said video encoders with respect to an available bandwidth at the output of the multiplexer and the complexity of the encoded video signals of said video encoder. It further comprises associated forward error correction (FEC) coders for applying to said encoded video signals a forward error correction (FEC) code at a channel coding rate, the controller having at least one additional input to receive a network transmission quality feedback of a video distribution network linked to the multichannel video compression system and having additional outputs for controlling the channel coding rate of said forward error correction (FEC) coders, the outputs of said forward error correction (FEC) coders being provided to corresponding inputs of said multiplexer.

Thus, the present invention takes into account not only the available output bandwidth but also the network transmission quality of the video distribution network to adjust the forward error correction (FEC) coding rate for each channel.

Preferably, the system comprises means to process statistical calculus on the measurements of a network transmission quality feedback 13.

Advantageously, the system further comprises means to allocate the available bandwidth at the output of the multiplexer among the different channels depending on their complexity and with respect to a fairness criterion and also determination means using a distortion model taking into account network transmission quality feedback, the allocated bandwidth and a smoothness criterion in order to determine, for said channels, the video coding rate and the channel coding rate.

Furthermore, a multichannel video distribution network is provided.

The invention also concerns a method for optimizing video quality in a multichannel video distribution network comprising the steps of encoding video signals received from a corresponding channel along to a video coding rate, determining the complexity of the encoded video signals, multiplexing encoded video signals into a multiplexed encoded video signal, adapting the video coding rate of said video encoders with respect to an available bandwidth at the output of the multiplexer and the complexity of the encoded video signals of said video encoders. The method further comprises the step of applying to said encoded video signals a forward error correction (FEC) code at a channel coding rate in function of a network transmission quality feedback of a video distribution network linked to the multichannel video compression system.

Alternatively, the method comprises the step of processing statistical calculus on the measurements of a network transmission quality feedback 13.

In a preferred embodiment, the method comprises the step of allocating the available bandwidth at the output of the multiplexer among the different channels depending on their complexity and with respect to a fairness criterion and the step of determining, for said channels, the video coding rate and the channel coding rate by using a distortion model taking into account a network transmission quality feedback, the allocated bandwidth and a smoothness criterion.

## BRIEF DESCRIPTION OF THE DRAWINGS

FIG.**1** is a block diagram of a statistical multiplexer according to the state of the art;
FIG.**2** is a block diagram of a statistical multiplexer according to the present invention.

## DETAILED DESCRIPTION OF THE INVENTION

The present invention relates to the optimization of the video and protection coding in a statistical multiplexer in function of the network features to improve video quality at receivers.

As used herein, the term "network" refers generally to any type of telecommunications or data network. Such network or portions thereof may utilize any one or more different transmission media (e.g., wired/RF cable, RF wireless) and/or communications or networking protocols (e.g., SONET, DOCSIS, IEEE Std. 802.3, 802.11, 802.15, 802.16 (WiMAX), ATM, X.25, Frame Relay, 3GPP, 3GPP2, WAP, SIP, UDP, FTP, RTP/RTCP, H.323, etc.).

As used herein, the terms "video program" and "video signal" refer to audio, video, graphics files (in uncompressed or compressed format), icons, softwares, text files and scripts, data, binary files and other computer-usable data used to operate a client device and produce desired audio-visual effects on a client device for the viewer.

As used herein, the term "statistical" refers without limitation to any process, component or analytical framework based at least in part on one or more statistical, random or deterministic parameters.

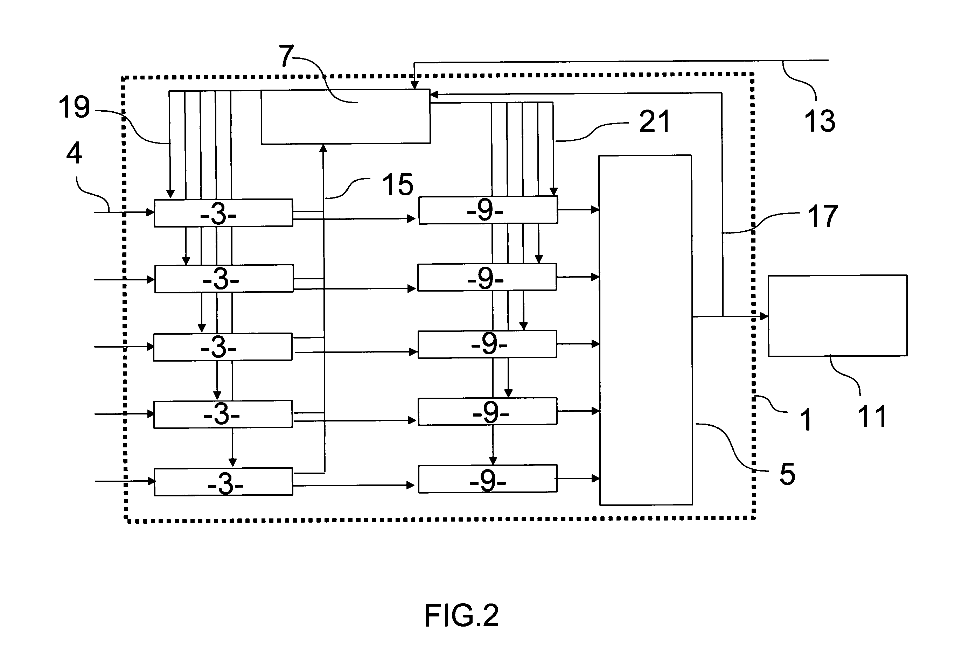

FIG.2 illustrates, in block diagram form, a multichannel video compression system in form of a statistical multiplexer 1 according to the present invention. This statistical multiplexer 1 is a part of a multichannel video distribution network. The statistical multiplexer 1 comprises several, in this case five, video encoders 3. Each of the said video encoders having an input channel 4 to receive a video program, video coding rate control means to adjust the compression level, video complexity determination means and an output linked to a forward error correction (FEC) coder 9. FEC coders 9 are equipped with an input channel to receive the signal coming from the video encoders 3, with FEC coding rate control means and with an output linked to the multiplexer 5. The multiplexer 5 has several inputs corresponding to said different channels and an output to send the multiplexed signal to modulation and transmission means 11. The statistical multiplexer 1 comprises furthermore a controller 7 having inputs to receive the different measured parameters, in particular a network transmission quality feedback 13, a program complexity feedback 15 and an available bandwidth feedback 17, and several, in this case ten, outputs to send video coding rate consigns 19 to the video coding rate control means and channel rate consigns 21 to the channel, or FEC, coding rate control means.

The number of channels in the statistical multiplexer is not limited and depends on the number of video programs needed to be broadcasted on the network. The signal of each video program is first sent to a corresponding video encoder 3 for compression at a given video coding rate determined by the controller 7 as a function of the complexity of the encoded programs and of the total available bandwidth feedback 17. Said complexity is determined by the video encoders 3 and sent, as a program complexity feedback 15, to the controller 7. The complexity corresponds, for example, to the ratio of the peak signal to noise ratio (PSNR) over the number of bits allocated. The controller 7 additionally applies a fairness criterion for computing the bitrates allocated to the different channels. Fairness criterion states that all received program should have similar video qualities.

The bitrate R(j) allocated to each channel j can be processed, for example, according to the following equations:

$$R(j) = Rc \times \frac{F(j)}{\sum_j F(j)}$$

with $R_c$ the total bitrate corresponding to the total available bandwidth and $F(j)$ a fairness score obtained by
*min F (j)*

*where*

$$F(j) = \sqrt{\left( \frac{1}{3} \sum_{i=1}^{3} (fair_i(j))^2 - \left( \frac{1}{3} \sum_{i=1}^{3} (fair_i(j)) \right)^2 \right)}$$

*with fair*

$$(j) = \frac{(X_i(j))}{\left( \sum_{n=1}^{3} X_n(j) \right)}$$

where X(j) is the program complexity of channel j.

At the output of the video encoder 3, the encoded video signal is sent to a forward error correction (FEC) coder 9. FEC coder 9 adds additional redundant coded information to the encoded video signal in order to minimize the number of transmission errors and to improve the reliability of the transmission. The level of channel (or FEC) coding rate can be adjusted by the controller 7 to provide an error protection adapted to the broadcasting conditions on the network. The general idea of the invention is to increase protection if the network transmission quality feedback 13 is poor and to diminish protection when the network transmission quality feedback is good. Thus the amount of redundant data added by the FEC coder 9 is optimized with regard to the network transmission quality feedback. The FEC coding rate is advantageously optimized for each channel 4.

Thus, another parameter taken into account by the controller 7 is the network transmission quality feedback 13 of the video distribution network. The network transmission quality signal can be provided by the measurements of a network transmission quality feedback 13, for example the signal to noise ratio (SNR). These measurements are processed to obtain a global descriptive statistic, for example the median value can be computed, for each program. Based on this value the controller 7 can adjust the FEC (or channel) coding rates of the corresponding channel to optimize the video quality of the users. To do that, the controller 7 uses, for each channel, a distortion model with the value of the signal to noise ratio or of another network transmission quality feedback 13 and the coding rates as input parameters and constrained by a smoothness criterion and the allocated bitrate. Smoothness criterion states that each received program should have stable visual quality expressed in peak signal to noise ratio (PSNR).

Based on the distortion model, the controller 7 can determine within an allocated bandwidth for one channel the optimal trade-off between the video coding rate and the channel (or FEC) coding rate, to obtain the best video quality for users. These optimal coding rate values are then applied to the video encoders and FEC coders of the corresponding channel.

At the output of the FEC coder 9, the signal is transmitted to the multiplexer 5. The multiplexer 5 multiplexes all FEC encoded video signals in one multiplexed signal ready to be transmitted to the modulation and transmission means 11 of the network.

Thus, the present invention allows the improvement of the users video quality by optimizing the repartition of the available bandwidth among the different program depending on their complexity and by permanently adapting both video encoding and forward error correction coding rates to decrease signal losses during transmission.

**Claims**

1. A multichannel video compression system comprising:

   - a plurality of video encoders (3) for encoding video signals along to a video coding rate, said video encoders (3) receiving video signals from a corresponding channel (4),
   - complexity determination means to determine the complexity of the encoded video signals,
   - a multiplexer (5) for multiplexing encoded video signals into a multiplexed encoded video signal,
   - a controller (7) to adapt the video coding rate of said video encoders with respect to an available bandwidth at the output of the multiplexer (5) and the complexity of the encoded video signals of said video encoder,

wherein it further comprises associated forward error correction (FEC) coders (9) for applying to said encoded video signals a forward error correction (FEC) code at a channel coding rate, the controller having at least one additional input to receive a network transmission quality feedback (13) of a video distribution network linked to the multichannel video compression system and having additional outputs for controlling the channel coding rate of said forward error correction (FEC) coders (9), the outputs of said forward error correction (FEC) coders being provided to corresponding inputs of said multiplexer (5).

**2.** A multichannel video compression system in accordance with claim 1 wherein it further comprises means to process statistical calculus on the measurements of a network transmission quality feedback (13).

**3.** A multichannel video compression system in accordance with claim 1 or 2 wherein it further comprises means to allocate the available bandwidth at the output of the multiplexer (5) among the different channels depending on their complexity and with respect to a fairness criterion and determination means using a distortion model taking into account network transmission quality, the allocated bandwidth and a smoothness criterion in order to determine, for said channels, the video coding rate and the channel coding rate.

**4.** A multichannel video distribution network wherein it comprises a multichannel video compression system in accordance with any of the previous claims.

**5.** Method for optimizing video quality in a multichannel video distribution network comprising the following steps:

- encoding video signals received from a corresponding channel along to a video coding rate,
- determining the complexity of the encoded video signals,
- multiplexing encoded video signals into a multiplexed encoded video signal,
- adapting the video coding rate of said video encoders with respect to an available bandwidth at the output of the multiplexer (5) and the complexity of the encoded video signals of said video encoders (3),

wherein it further comprises the step of applying to said encoded video signals a forward error correction (FEC) code at a channel coding rate in function of a network transmission quality feedback (13) of a video distribution network linked to the multichannel video compression system.

**6.** Method for optimizing video quality in a multichannel video distribution network in accordance with claim 5, wherein it further comprises the step of processing statistical calculus on the measurements of a network transmission quality feedback (13).

**7.** Method for optimizing video quality in a multichannel video distribution network in accordance with claim 5 or 6, wherein it further comprises the step of allocating the available bandwidth at the output of the multiplexer among the different channels depending on their complexity and with respect to a fairness criterion and the step of determining, for said channels, the video coding rate and the channel coding rate by using a distortion model taking into account network transmission quality feedback, the allocated bandwidth and a smoothness criterion.

FIG.1

EP 2 046 042 A1

FIG.2

**European Patent Office**

**EUROPEAN SEARCH REPORT**

Application Number

EP 07 29 1195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 113 614 A (TOKYO SHIBAURA ELECTRIC CO [JP]) 4 July 2001 (2001-07-04) | 1,5 | INV.<br>H04N7/24 |
| A | * paragraphs [0018], [0066] - [0075]; claims 1,4; figures 2,5 * | 2-4,6,7 | H04N7/26<br>H04N7/58<br>H04N7/64 |
| | ----- | | |
| X | SEYTTER F: "An efficient multiplex architecture for mobile MPEG-4 systems - Image Communication" SIGNAL PROCESSING. IMAGE COMMUNICATION, ELSEVIER SCIENCE PUBLISHERS, AMSTERDAM, NL, vol. 14, no. 6-8, May 1999 (1999-05), pages 599-606, XP004165398 ISSN: 0923-5965 | 1,5 | |
| A | * page 601, left-hand column, paragraph 3 - page 603, left-hand column, paragraph 2; figures 2,3 * | 2-4,6,7 | |
| | ----- | | |
| A | US 2003/067877 A1 (SIVAKUMAR RAGHUPATHY [US] ET AL) 10 April 2003 (2003-04-10) * abstract * * paragraphs [0047] - [0050] * | 1-7 | |
| | ----- | | TECHNICAL FIELDS SEARCHED (IPC) |
| A | US 2002/075834 A1 (SHAH TUSHAR RAMANLAL [US] ET AL SHAH TUSHAR RAMANLAL [US] ET AL) 20 June 2002 (2002-06-20) * paragraphs [0081] - [0084]; figure 14 * | 1-7 | H04N |
| | ----- | | |
| A | HEINZELMAN W R ET AL: "Unequal error protection of MPEG-4 compressed video" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24 October 1999 (1999-10-24), pages 530-534, XP010369005 ISBN: 0-7803-5467-2 * the whole document * | 1-7 | |
| | ----- | | |
| | -/-- | | |

The present search report has been drawn up for all claims

| Place of search | Date of completion of the search | Examiner |
|---|---|---|
| Berlin | 4 December 2007 | Gries, Thomas |

EPO FORM 1503 03.82 (P04C01)

**European Patent Office**

**EUROPEAN SEARCH REPORT**

Application Number

EP 07 29 1195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHENG H ET AL: "QoS aware mobile video communications" MILITARY COMMUNICATIONS CONFERENCE PROCEEDINGS, 1999. MILCOM 1999. IEEE ATLANTIC CITY, NJ, USA 31 OCT.-3 NOV. 1999, PISCATAWAY, NJ, USA,IEEE, US, 31 October 1999 (1999-10-31), pages 1231-1235, XP010369821 ISBN: 0-7803-5538-5 * the whole document * | 1-7 | |
| A | EP 0 759 667 A (DIGI MEDIA VISION LTD [GB]) 26 February 1997 (1997-02-26) * the whole document * | 1-7 | |
| A | US 6 084 910 A (STANGER LEON [US] ET AL) 4 July 2000 (2000-07-04) * abstract * * column 1, line 26 - line 37 * | 1-7 | |
| A | WO 98/11687 A (PHILIPS ELECTRONICS NV [NL]; PHILIPS NORDEN AB [SE] PHILIPS ELECTRONIC) 19 March 1998 (1998-03-19) * page 5, paragraph 2 - page 7, paragraph 1 * | 1-7 | TECHNICAL FIELDS SEARCHED (IPC) |
| A | EP 1 037 473 A (THOMSON BROADCAST SYSTEMS [FR]) 20 September 2000 (2000-09-20) * the whole document * | 1-7 | |
| A | US 6 195 388 B1 (CHOI JAE GARK [KR] ET AL) 27 February 2001 (2001-02-27) * the whole document * | 1-7 | |

The present search report has been drawn up for all claims

| Place of search | Date of completion of the search | Examiner |
|---|---|---|
| Berlin | 4 December 2007 | Gries, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 29 1195

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2007

| Patent document cited in search report | | | Publication date | | Patent family member(s) | | Publication date |
|---|---|---|---|---|---|---|---|
| EP 1113614 | A | | 04-07-2001 | JP | 2001189713 | A | 10-07-2001 |
| | | | | US | 6826233 | B1 | 30-11-2004 |
| US 2003067877 | A1 | | 10-04-2003 | CA | 2461926 | A1 | 03-04-2003 |
| | | | | EP | 1446916 | A1 | 18-08-2004 |
| | | | | WO | 03028296 | A1 | 03-04-2003 |
| | | | | US | 2005152397 | A1 | 14-07-2005 |
| US 2002075834 | A1 | | 20-06-2002 | NONE | | | |
| EP 0759667 | A | | 26-02-1997 | AU | 697308 | B2 | 01-10-1998 |
| | | | | AU | 6217096 | A | 27-02-1997 |
| | | | | CA | 2183813 | A1 | 23-02-1997 |
| | | | | JP | 9149388 | A | 06-06-1997 |
| | | | | US | 5708664 | A | 13-01-1998 |
| | | | | ZA | 9606473 | A | 19-02-1997 |
| US 6084910 | A | | 04-07-2000 | NONE | | | |
| WO 9811687 | A | | 19-03-1998 | EP | 0861535 | A2 | 02-09-1998 |
| | | | | JP | 2000501586 | T | 08-02-2000 |
| | | | | US | 5793425 | A | 11-08-1998 |
| EP 1037473 | A | | 20-09-2000 | CN | 1266335 | A | 13-09-2000 |
| | | | | FR | 2790899 | A1 | 15-09-2000 |
| | | | | JP | 2000299869 | A | 24-10-2000 |
| | | | | US | 6654416 | B1 | 25-11-2003 |
| US 6195388 | B1 | | 27-02-2001 | NONE | | | |

EPO FORM P0459

For more details about this annex : see Official Journal of the European Patent Office, No. 12/82